# EUROPEAN PATENT APPLICATION

(11) **EP 4 679 052 A1**
(43) Date of publication of application: **14.01.2026**
(21) Application number: 24188310.7
(22) Date of filing: 12.07.2024
(51) Int. Cl.: G01M 13/045, F03D 17/00

(54) **CONDITION MONITORING ARRANGEMENT**

(71) Applicant: Siemens Gamesa Renewable Energy A/S, 7330 Brande (DK)
(72) Inventor: Orozco Santillan, Arturo, 7430 Ikast (DK); Nielsen, Jesper Hjortshøj, 8653 Them (DK)
(74) Representative: SGRE-Association

(57) **Abstract**

The invention describes a method of monitoring the condition of a fluid-film bearing (20) arranged to support the generator of a direct-drive wind turbine (2), which method comprises providing a hydrophone (10) configured to convert acoustic noise to an output signal (10D); immersing the hydrophone (10) in the lubricating fluid (205) of the fluid-film bearing (20); providing access to the hydrophone output signal (10D) at the exterior of the fluid-film bearing (20); and evaluating the hydrophone output signal (10D) to determine the condition of the fluid-film bearing (20). The invention further describes a condition monitoring arrangement (1) of a fluid-film bearing (20); and a direct-drive wind turbine (2) comprising a fluid-film bearing (20) and such a condition monitoring arrangement (1).

## Description

### Background

Machinery with rotating parts can deploy various kinds of bearing, and the choice of bearing can depend on various factors such as the type and magnitude of the expected loads, the speed of rotation, accessibility for maintenance, etc. During the lifetime of the machinery, it can be advantageous to perform condition monitoring with the aim of detecting potential problems at an early stage, allowing maintenance work to be carried out in good time and avoiding unscheduled downtime. In the case of a roller bearing, for example, condition monitoring can be done by mounting accelerometers or transducers on the bearing case and collecting measurements during operation of the bearing. The data collected by such case-mounted sensors can be processed to detect any deviation from the expected signal types. For example, an alteration in one of the kinematic frequencies defined by the bearing geometry can be indicative of a damaged roller.

A fluid-film bearing can be used instead of a roller bearing for various applications, for example in a hydro-electric power plant, a ship's drivetrain, a wind turbine gearbox, etc. In such applications, a fluid-film bearing generally supports a component that rotates without interruption for a relatively long period of time, for example over many hours or even days. The fluid film is generally a lubricant such as a synthetic oil. Condition monitoring of such fluid-film bearings can be difficult, and it is generally not possible to deploy systems such as those used for condition monitoring of roller bearings. For example, the non-linear mode of force transfer from the bearing interior to its housing would mean that any measurements collected by a case-mounted sensor would also contain irrelevant information. Temperature sensors to monitor heat from friction can be useful up to a point, but thermal lag may result in bearing failure occurring before meaningful information has been identified in the sensor data. In another approach, condition monitoring of fluid-film bearings can be done by an arrangement of proximity probes, for example two proximity probes oriented 90° apart. Such an arrangement of probes makes it possible to monitor the position of the rotating part relative to the stationary part, i.e. to perform orbit analysis.

However, while the above techniques can obtain useful data for condition monitoring of relatively small fluid-film bearings in the high sliding-speed applications mentioned above, they are only of limited usefulness in the case of a large fluid-film bearing in a low sliding-speed and high pressure application such as the generator of a direct-drive wind turbine, which can have very long rotor blades (e.g. in the order of 80 m or more) and a rotor with a correspondingly low rotational speed. The high pressure is a result of the large rotor acting on the lubricating oil film between the stationary and rotary bearing parts. In the case of a direct-drive wind turbine, the rotational velocity of the aerodynamic rotor (which determines the sliding speed of a fluid film bearing) can be up to about 14 rpm (revolutions per minute) during normal modes of operation, and can reduce to a very low velocity during an idle mode, for example a velocity of less than 1 rpm.

In such an application, issues such as insufficient lubrication, overheating from friction, deterioration of the sliding surfaces, loss of motion of self-aligning pads, particle contamination in the oil film etc., are likely to arise at some stage during the service life of the bearing. However, meaningful condition monitoring of the bearing is made difficult because of the slow dynamic response, and the health condition of the bearing is therefore difficult to determine. Furthermore, the large dimensions of the bearing in such an application makes known methods such as orbit analysis challenging to implement, because of the inherent stiffness of the large bearing parts. For these reasons, faults in such a large bearing may remain undetected by the conventional techniques, resulting in costly maintenance efforts and loss of earnings during downtime.

It is therefore an object of the invention to provide reliable conditioning monitoring for a large fluid-film bearing in a slow-speed application.

This object is achieved by the claimed method of monitoring the condition of a fluid-film bearing; by the claimed condition monitoring arrangement; and by the claimed wind turbine.

### Description

The claimed method is discussed in the context of a fluid-film bearing arranged to support the generator of a direct-drive wind turbine. However, it shall be understood that the method can be used to assess the health of a fluid-film bearing (of any size) arranged to support a component in essentially any type of rotary machine.

According to the invention, the method comprises steps of providing at least one hydrophone configured to generate an acoustic output signal and immersing the hydrophone in the lubricating fluid of the fluid-film bearing; providing access to the acoustic output signal at the exterior of the fluid-film bearing; evaluating the acoustic output signal during operation of the wind turbine; and determining the condition of the fluid-film bearing on the basis of the acoustic output signal evaluation.

An advantage of the inventive method is that it provides a way of performing condition monitoring for a large-scale, low-speed and high-pressure fluid-film bearing, allowing such a fluid-film bearing to be deployed as a main bearing in a large direct-drive wind turbine, i.e. an application for which roller bearings may result in high replacement and/or maintenance costs.

The inventive condition monitoring arrangement comprises at least one hydrophone immersed in the lubricating fluid (usually a synthetic oil) of the bearing and configured to generate an acoustic output signal during operation of the machine; and a data evaluation arrangement configured to receive the acoustic output signal during operation of the wind turbine and to determine the condition of the fluid-film bearing on the basis of the acoustic output signal.

The inventive condition monitoring arrangement can be realised at a favourably low cost, since a hydrophone can be incorporated in the bearing with little effort. A hydrophone is a relatively inexpensive part, and the invention can be realised using one or more readily available off-the-shelf hydrophones. Furthermore, the inventive monitoring arrangement can make a valuable contribution towards reducing the maintenance costs of direct-drive wind turbine, since the wind turbine operator will be able to make reliable health assessments of the bearing, identifying potential problems at an early stage and taking preventive measures to avoid unscheduled downtime.

According to the invention, the direct-drive wind turbine comprises a fluid-film bearing arranged to support the generator, i.e. the inner diameter of the bearing essentially corresponds to the diameter of the stator shaft. The wind turbine further comprises an instance of the inventive condition monitoring arrangement, adapted to determine the condition of the fluid-film bearing at any time during the service life of the bearing.

The invention further comprises a computer program product with a computer program that is directly loadable into a memory of a condition monitoring arrangement, with program elements for performing steps of the inventive method when executed by a processor of the condition monitoring arrangement.

Particularly advantageous embodiments and features of the invention are given by the dependent claims, as revealed in the following description. Features of different claim categories may be combined as appropriate to give further embodiments not described herein.

In the following, it may be assumed that the fluid-film bearing is a hydrodynamic bearing, and these terms may be used interchangeably. The fluid-film bearing can have self-aligning pads, usually a combination of axial pads and radial pads. In a direct-drive wind turbine, the fluid-film bearing can be assumed to have a large diameter, for example in the order of 4 metres. Such a large fluid-film bearing shall be understood to be designed for a sliding speed in the order of only 3 m/s or less, and may even operate at a sliding speed less than 0.1 m/s (e.g. in an idle mode of operation). However, it shall be understood that the inventive fluid-film bearing can have a smaller diameter and/or can be designed for a higher sliding speed.

In the fluid film bearing under discussion, the oil film is essentially contained in a closed cavity, so that pressure waves from an acoustic noise source will propagate through the oil film and can undergo many reflections off various surfaces before being picked up by a hydrophone. Any vibrating surface in contact with the lubricating oil in which the hydrophone is immersed will generate acoustic waves detectable by that hydrophone, according to its sensitivity and the amplitude of the acoustic waves. Vibrations can originate from the rotor and be transmitted to a surface of the bearing cavity; vibrations can originate from any object in the lubricating oil, for example a bearing pad, a debris particle, etc.

The fluid-film bearing can be essentially the same type as a fluid-film bearing already in use in a wind turbine configuration, and need only be adapted to incorporate a number of hydrophones so that each hydrophone can measure acoustic noise in the -lubricating fluid and provide its measurements to a subsequent stage of the condition monitoring arrangement. The inventive condition monitoring arrangement is independent of bearing design details and only requires a fluid-filled cavity.

Generally, a hydrophone comprises a piezoelectric transducer that outputs an electric signal in response to a change in sound pressure. Unlike a standard microphone, a hydrophone can more accurately detect the higher sound pressures arising in a liquid that is more dense and much less compressible than air. A hydrophone is usually deployed underwater, for example to record the sounds of marine animals, for underwater acoustic communication, etc. When used in the inventive condition monitoring arrangement, a hydrophone will be immersed in lubricant oil instead of water. Therefore, in a preferred embodiment of the invention, each hydrophone is isolated from the lubricating fluid by a suitable cover or coating, for example a thin sheath of rubber material.

In the case of a pristine (i.e. fault-free) fluid-film bearing, a noise pattern detected by a hydrophone can be regarded as a type of "acoustic noise fingerprint" or "acoustic signature", i.e. a set of expected frequency amplitudes. The acoustic signature can be in the form of a set of expected frequency amplitudes over a frequency range of interest, i.e. an expected acoustic frequency spectrum or "signature spectrum". A frequency spectrum comprises a set of coefficients of a Fourier series, in this case for the hydrophone output signal. Therefore, in a particularly preferred embodiment of the invention, an acoustic signature is established for the bearing during an initial stage. For example, an acoustic signature can be established for a pristine bearing in a test environment, and the acoustic signature can be used for subsequent installations in which that type of bearing is deployed. Alternatively, an acoustic signature can be established for a pristine bearing as soon as the wind turbine installation is operational.

The pattern of pressure waves arising in the fluid-film bearing can be expected to change according to the wind turbine mode of operation, since the higher loads arising at high wind speeds will result in greater vibration and deformation of the various drivetrain components. A wind turbine can have multiple modes of operation, including output power generating modes, idle modes, etc. Therefore, in a further preferred embodiment of the invention, an acoustic signature is established for some or all operating modes of the wind turbine.

An acoustic signature of a fluid-film bearing can be refined by evaluating hydrophone signal data from multiple equivalent wind turbine installations. For example, common features in the hydrophone signals from the equivalent installations can be used to establish an acoustic signature for that specific bearing type in that specific wind turbine configuration.

Throughout during the service life of a fluid-film bearing, any difference between an observed or "real-life" acoustic spectrum and the relevant acoustic signature can be interpreted as indications of possible problems in the bearing.

In a particularly preferred embodiment of the invention, the data evaluation arrangement is configured to perform trend analysis to detect a trend in any frequency component of the observed acoustic spectrum. A noticeable trend can be indicative of a problem developing in the interior of the bearing. If a deviation such as a trend is identified, the wind turbine controller can react accordingly, for example by reducing the rotor speed or even halting the wind turbine.

In a further preferred embodiment of the invention, the wind turbine uses ancillary data normally collected during operation of the wind turbine (during power generating modes and also during idle mode), and the ancillary data is also used in the decision-making process. Ancillary data can be a relevant temperature (for example the temperature of the bearing, the bearing housing, the generator, an ambient temperature, etc.); a particle count (relating to particles in the bearing oil); wind speed; wind direction; rotor speed; momentary power output, or any other relevant information.

In a preferred embodiment of the invention, the data evaluation arrangement can report a condition number to describe the state of the fluid-film bearing. For example, a condition number from 1 to 5 can be used to describe the state of the hydrodynamic bearing: here, condition number 1 can mean that the bearing is operating normally; condition number 2 can indicate that the bearing should be checked at the next scheduled service visit to the wind turbine; condition number 3 can mean that a service visit should be scheduled soon, but the wind turbine can continue to operate at normal production; condition number 4 can mean that a service visit should be scheduled soon and the wind turbine will operate at reduced power output until then; condition number 5 can mean there is a serious problem and the wind turbine will be stopped. A condition number can be used by the wind turbine controller as a basis from which to compute power references, for example.

During operation of the wind turbine, the hydrophone data can be processed as described above to compute an acoustic noise spectrum. This is preferably done continuously.

Alternatively or in addition to comparing an acoustic spectrum and a signature spectrum as described above, the inventive method can implement other techniques to extract information from a hydrophone signal to assess the health of the fluid-film bearing. For example, the rms (root-mean-square) value of the hydrophone signal can be calculated over a specific frequency range. The calculated rms value can then be compared to a predefined threshold. If the calculated rms value exceeds the threshold, this can be indicative of a potential problem in the fluid-film bearing. In another approach, cepstrum techniques can be deployed to detect repetitive features (echoes) in the hydrophone output signals, which can be indicative of a damaged or malfunctioning element in the bearing. Regardless of the approach taken, a hydrophone output signal can be evaluated in the context of hydrophone data collected from multiple equivalent wind turbine installations.

As indicated above, a wind turbine can be operating in any one of various modes while generating output power. However, during certain conditions such as low-wind conditions, the wind turbine may be in idle mode (no output power is being generated), in which the aerodynamic rotor turns very slowly. During idle mode, external vibration sources are essentially muted, and it may be possible to detect anomalies in the hydrophone data arising from vibration sources in the bearing itself.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a fluid-film bearing of the type that may be used to support the generator of a direct-drive wind turbine;
Figure 2 shows the fluid-film bearing of Figure 1 adapted for use with the inventive condition monitoring arrangement;
Figure 3 shows an exemplary embodiment of the inventive condition monitoring arrangement;
Figure 4 shows an exemplary acoustic noise signature;
Figure 5 shows an acoustic noise signature and an acoustic noise spectrum obtained during operation;
Figure 6 shows an exemplary set of acoustic noise signatures for multiple operating modes of a wind turbine implementing the inventive condition monitoring arrangement;
Figure 7 shows a further exemplary embodiment of the inventive condition monitoring arrangement;
Figure 8 shows a prior art condition monitoring arrangement.

In the diagrams, like numbers refer to like objects throughout. Objects in the diagrams are not necessarily drawn to scale.

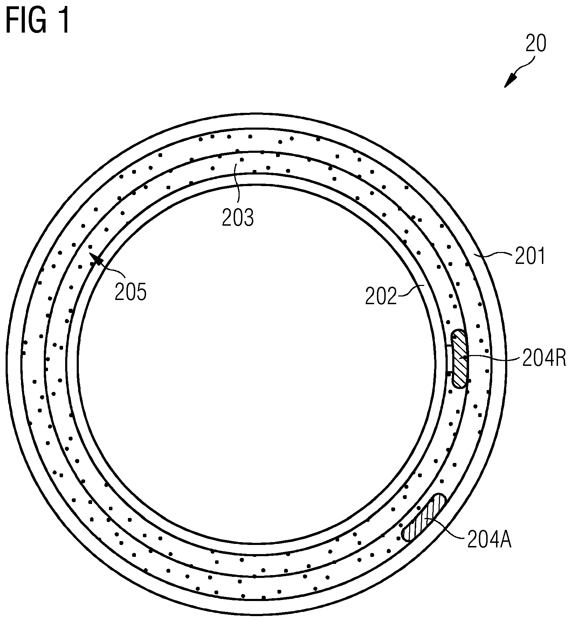

Figure 1 shows a fluid-film bearing 20 of the type that may be used to support the generator of a direct-drive wind turbine. The bearing 20 can be assumed to have a diameter of several metres. The fluid-film bearing 20 comprises an outer ring 201, an inner ring 202 and other housing parts (not shown), shaped to define an oil-filled cavity 203. The outer ring 201 can be a surface of an outer rotating ring, while the inner ring 202 can be a surface of a stationary support structure, as will be clear to the skilled person. Self-aligning axial pads 204A and radial pads 204R are arranged in the cavity 203. The drawing shows an exemplary axial pad 204A arranged between a bearing housing (not shown) and the outer ring 201 to make contact with a side face of the outer ring 201; and an exemplary radial pad 204R arranged between the inner and outer rings 201, 202 to make contact with the inward-facing surface of the outer ring 201. As the skilled person will be aware, the bearing can be quipped with any number of pads 204A, 204R, and these can be arranged in any suitable configuration.

Over the service lifetime of the bearing 20, wear and tear on the sliding surfaces (particularly the surfaces of the rotating outer ring 201) and the alignment pad surfaces can develop. Particle contamination in the lubricating oil 205 can encourage surface deterioration. It is generally not possible to detect such developments in this type of bearing using conventional condition monitoring techniques such as orbit analysis.

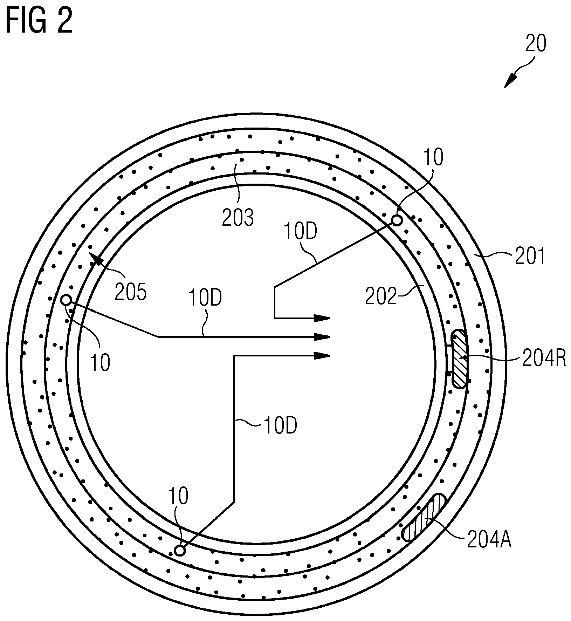

Figure 2 shows the fluid-film bearing 20 of Figure 1, adapted for the inventive condition monitoring arrangement 1. The diagram shows several hydrophones 10 arranged in the oil-filled cavity 203. In this exemplary embodiment, three hydrophones 10 are arranged equidistantly about the bearing cavity 203. Each hydrophone 10 is placed so that it does not affect the bearing's function. A hydrophone 10 detects pressure alterations in the fluid in which it is immersed, and generates a corresponding electrical signal. As illustrated in the diagram, the output signal 10D of each hydrophone 10 is brought to the exterior of the bearing 20, so that the output signal 10D can be "read" in a subsequent signal processing stage 11 of the condition monitoring arrangement 1.

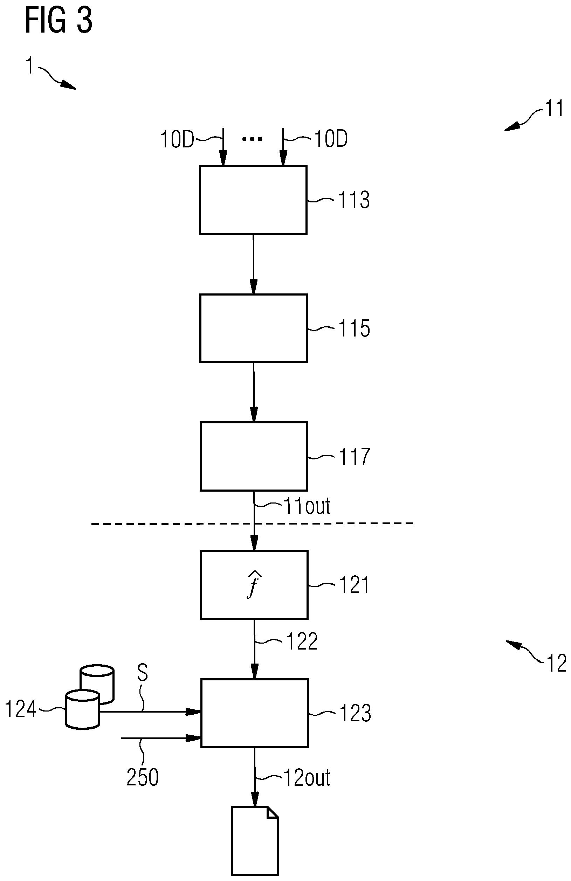

Figure 3 shows a simplified block diagram of the inventive condition monitoring arrangement 1 as deployed in a direct-drive wind turbine 2. The output 10D from a hydrophone is analog (in the form of a voltage or an electrical current), which is converted into a digital signal 11out in an ADC stage 11 comprising an amplification module 113, a low pass filtering module 115 (to avoid aliasing in the signal caused by unexpected higher frequency components) and a digital sampling module 117. After analogue-to-digital conversion in this way, the ADC stage 11 presents the hydrophone information as a digital signal 11out for a subsequent analysis stage 12.

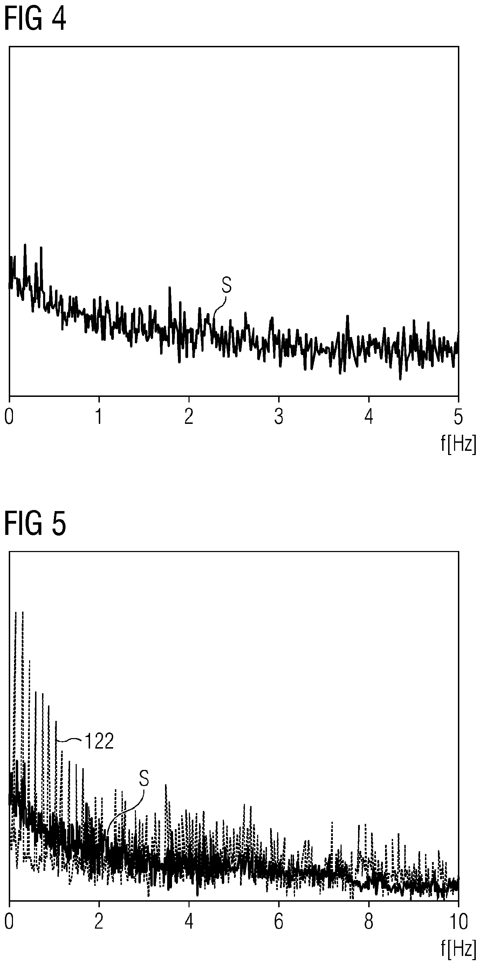

In a fault-free bearing 20, the acoustic signal as detected by the hydrophone arrangement will have essentially the same characteristics as the acoustic fingerprint of that bearing. Figure 4 shows an exemplary acoustic fingerprint in the form of a signature spectrum S. The signature spectrum S comprises various frequencies at certain amplitudes, and can be computed in an initial stage 121 by processing the sampled data using a suitable transformation algorithm as will be known to the skilled person.

However, if some kind of physical damage has occurred somewhere inside the bearing 20, the acoustic signal will no longer be described by the signature spectrum. Figure 5 shows a signature spectrum S for a pristine bearing 20 and an observed acoustic noise spectrum 122 obtained for that bearing 20 at some point during its service life. The actual spectrum departs significantly from the signature spectrum S, indicating that a problem is developing in the bearing 20.

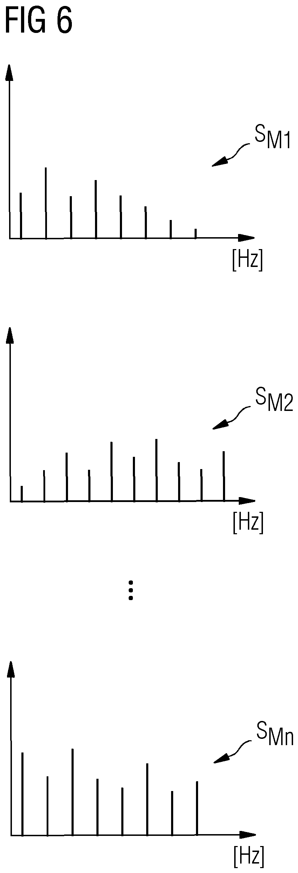

The nature of the acoustic noise in the fluid-film bearing 20 of a wind turbine 2 will change depending on the wind turbine's operating mode. The level of noise and the frequencies present in the noise can depend on whether the wind turbine is being operated in a low wind-speed mode, a maximum wind-speed mode, etc. A wind turbine can have several distinct operating modes. Figure 6 illustrates a set of exemplary acoustic noise signatures S_{M1}, S_{M2}, ... S_{Mn} for n operating modes. These can be established in a preliminary stage, for example using a pristine bearing 20 of a new wind turbine installation, and stored in a memory 124.

Therefore, the analysis stage 12 is preferably configured to choose the most appropriate acoustic signature S from such a set S_{M1}, S_{M2}, ... S_{Mn} on the basis of operational conditions 250 of the wind turbine. Relevant parameters can be rotor speed, output power, rotor azimuth position, etc. as described above, and this ancillary information can be obtained from various sensors deployed in the wind turbine 2 as will be known to the skilled person.

The observed spectrum 122 can be analysed in a subsequent stage 123 to identify any frequency component whose amplitude is significantly different than its signature amplitude, i.e. the amplitude of that frequency component in the relevant signature noise spectrum. To this end, each frequency component of the signature spectrum S can be assigned a predetermined threshold. If one or more frequency components exceed the predetermined threshold(s), this can be indicative of deterioration of the fluid-film bearing 20. For example, in the observed spectrum 122 of Figure 5, the amplitudes of the frequency components up to 2 Hz are significantly greater than in the signature spectrum S, and this difference can be indicative of insufficient lubrication which, if not remedied, can lead to severe damage and costly repairs.

The spectrum analysis stage 123 can then report the results of the analysis. A report 12out can contain relevant information such as which frequency component(s) exceeded a threshold. Of course, this report can be in a form that can readily be converted to a graphic representation of the momentary noise spectrum 122 of the fluid-film bearing compared to the signature noise spectrum S.

The report 12out may also include a health indicator such as a condition number. A condition number can be forwarded to the respective wind turbine controller, which can take it into consideration with other parameters (e.g. wind speed) when adjusting its power references. A condition number can also be used by the wind turbine controller to track the performance of the fluid-film bearing over time.

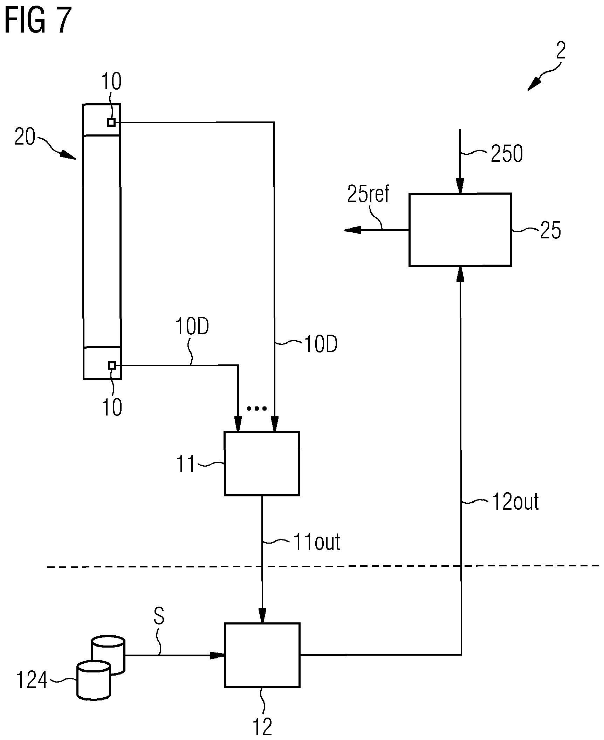

The signal pre-processing and analysis stages 11, 12 can be implemented locally in the wind turbine 2. Alternatively, signal pre-processing can be implemented in the wind turbine 2, and the output of the final stage can be sent to a remote application (park controller, back office etc.) configured to implement the analysis stage 12 as shown in Figure 7. The diagram shows a hydrodynamic bearing 20 arranged between the rotor and stator at the drive end of the wind turbine generator (not shown). The condition monitoring arrangement 1 comprises a number of hydrophones 10 arranged to record acoustic signals during operation of the wind turbine 2. Acoustic noise propagating through the oil film undergoes reflections at various surfaces as explained above and is picked up by the hydrophones.

The remote application 12 computes the frequency spectrum from the digital hydrophone data 10D collected during operation of the wind turbine 2, and compares the observed spectrum 122 to a signature spectrum S. The report 12out can be used as appropriate by a control module. For example, a local or remote wind turbine controller may conclude that the wind turbine 2 should operate at reduced power output until the hydrodynamic bearing 20 can be serviced, or that the bearing 20 has a serious fault and the wind turbine 2 should be stopped until the fault can be repaired. The various components of the wind turbine 2 are controlled using references 25ref generated by the wind turbine controller 25.

As indicated above, a wind turbine is generally equipped with ancillary sensors arranged to measure various parameters during operation of the wind turbine. The diagram indicates ancillary data 250 from such sensors being input to the wind turbine controller 25 for use in the decision-making process.

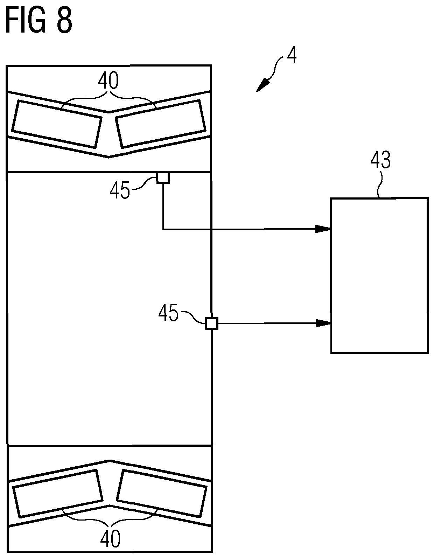

Figure 8 shows a roller bearing 4 which could be deployed between the rotor and stator of a direct-drive wind turbine with a generator that has dimensions similar to those of the embodiment described in Figure 1. Condition monitoring of this type of bearing 4 is well established, for example by deploying sensors 45 such as case-mounted accelerometers to monitor vibration in the bearing 4. Various kinds of damage to the bearing 4, for example deterioration of the rollers 40, can be deduced (in a local or remote module 43) from easily-detected changes in the data delivered by the sensors 45, for example by changes in kinematic frequencies that are clearly defined by the bearing geometry. Damage to this type of bearing 4 is therefore easily detected and generally does not occur suddenly, but instead develops over time, giving the operator sufficient opportunity to undertake preventive measures. This prior art approach to condition monitoring is suitable for roller bearings, but is unsuitable for fluid-film bearings. This is because, unlike in a roller bearing, the force transmission path to a case-mounted sensor is highly non-linear.

Although the present invention has been disclosed in the form of preferred embodiments and variations thereon, it will be understood that numerous additional modifications and variations could be made thereto without departing from the scope of the invention. For example, while the inventive approach to condition monitoring is particularly suited to a fluid-film bearing with a large diameter and low sliding speed, it can of course be applied to a fluid-film bearing with any diameter and any sliding speed.

For the sake of clarity, it is to be understood that the use of "a" or "an" throughout this application does not exclude a plurality, and "comprising" does not exclude other steps or elements.

## Claims

1. A method of monitoring the condition of a fluid-film bearing (20) arranged to support the generator of a direct-drive wind turbine (2), which method comprises
- providing a hydrophone (10) configured to convert acoustic noise to an output signal (10D);
- immersing the hydrophone (10) in the lubricating fluid (205) of the fluid-film bearing (20);
- providing access to the hydrophone output signal (10D) at the exterior of the fluid-film bearing (20);
- evaluating the hydrophone output signal (10D) to determine the condition of the fluid-film bearing (20).

2. A method according to the preceding claim, wherein the step of evaluating a hydrophone output signal (10D) comprises computation of an acoustic frequency spectrum (122) and comparison with an expected acoustic frequency spectrum (S, SM1, ..., SMn) .

3. A method according to the preceding claim, wherein an expected acoustic frequency spectrum (S, SM1, ..., SMn) is established for the fluid-film bearing (20) in its pristine condition.

4. A method according to any of claims 2 to 4, wherein an expected acoustic frequency spectrum (SM1, ..., SMn) is established for each operating mode of the wind turbine (2).

5. A method according to any of the preceding claims, wherein a hydrophone output signal (10D) is evaluated on the basis of hydrophone data obtained from multiple equivalent wind turbine installations.

6. A method according to any of the preceding claims, wherein the hydrophone output signal (10D) is evaluated during one or more operation modes of the wind turbine (2).

7. A method according to any of the preceding claims, wherein a hydrophone output signal (10D) is evaluated on the basis of ancillary data (250) collected for the wind turbine (2).

8. A condition monitoring arrangement (1) of a fluid-film bearing (20) arranged to support the generator of a direct-drive wind turbine (2), comprising
- at least one hydrophone (10) immersed in the lubricating fluid (205) of the bearing (20) and configured to convert acoustic noise to an output signal (10D); and
- a data evaluation arrangement (11, 12) configured to receive the acoustic output signal (10D) during operation of the wind turbine (2) and to determine the condition of the fluid-film bearing (20) on the basis of the hydrophone output signal (10D).

9. A condition monitoring arrangement according to the preceding claim, comprising a plurality of hydrophones (10) immersed in the lubricating fluid (205) of the bearing (20).

10. A condition monitoring arrangement according to claim 8 or claim 9, wherein the data evaluation arrangement (11, 12) is configured to perform trend analysis on the acoustic output signal (10D).

11. A condition monitoring arrangement according to any of claims 8 to 10, comprising a number of ancillary sensors arranged to collect ancillary wind turbine data (250), wherein ancillary data (250) comprises any of: momentary power output; temperature data; an oil particle count; wind speed; wind direction; rotor speed.

12. A direct-drive wind turbine (2) comprising a fluid-film bearing (20) arranged between the rotor and the stator of its generator, and further comprising a condition monitoring arrangement (1) according to any of claims 8 to 11 adapted to determine the condition of the fluid-film bearing (20) using the method of claims 1 to 7.

13. A direct-drive wind turbine according to the preceding claim, wherein the fluid-film bearing (20) is a hydrodynamic bearing.

14. A direct-drive wind turbine according to claim 12 or claim 13, wherein the fluid-film bearing (20) is adapted for a sliding speed of at most 5 m/s, more preferably at most 2 m/s.

15. A computer program product comprising a computer program that is directly loadable into a memory module of a condition monitoring arrangement (1) according to any of claims 8 to 11, and wherein the computer program comprises program elements for performing steps of the method according to any of claims 1 to 7 when executed by a processor of the condition monitoring arrangement (1).
